# EUROPÄISCHE PATENTSCHRIFT

(11) **EP 3 501 883 B1**
(45) Veröffentlichungstag und Bekanntmachung des Hinweises auf die Patenterteilung: **04.01.2023**
(21) Anmeldenummer: 18207160.5
(22) Anmeldetag: 20.11.2018
(51) Int. Cl.: H01R 13/66, B60L 53/18, B60L 53/30, B60L 53/67, H01R 31/06, H01R 13/639, H01R 13/707, H01R 13/516, B60L 53/16

(54) **LADEADAPTER**
CHARGING ADAPTER
ADAPTATEUR DE CHARGE

(30) Priorität: 22.12.2017 DE 102017131090
(43) Veröffentlichungstag der Anmeldung: 26.06.2019
(73) Patentinhaber: Westnetz GmbH, 44139 Dortmund (DE)
(72) Erfinder: Diefenbach, Dr. Ingo, 59425 Unna (DE)
(74) Vertreter: Cohausz & Florack

(56) Entgegenhaltungen:
- EP-A1- 2 690 740
- WO-A1-2011/098116
- WO-A1-2016/089925
- DE-A1-102011 007 763
- DE-C1- 3 327 087
- FR-A1- 3 010 581
- US-A- 6 149 445
- US-A1- 2013 169 226
- US-A1- 2016 144 728
- US-A1- 2016 347 191
- Anonymous: "Gerätestecker - Wikipedia", , 12 September 2017 (2017-09-12), pages 1-8, XP055792163, Retrieved from the Internet: URL:https://web.archive.org/web/2017091222 5527/https://de.wikipedia.org/wiki/Gerätes tecker [retrieved on 2021-04-01]

## Beschreibung

Die Anmeldung betrifft einen Ladeadapter für eine Ladestation, umfassend mindestens einen ersten, zu einem Ladeanschluss einer Ladestation korrespondierenden Adapteranschluss und mindestens einen zweiten, zu einem Haushaltsanschluss korrespondierenden Adapteranschluss. Darüber hinaus betrifft die Anmeldung ein System.

Um Elektrofahrzeuge in Form von Elektroautos elektrisch zu laden, werden vermehrt Ladestationen, also Elektrofahrzeugladestationen, aufgestellt. Bei einem Ladevorgang wird das Elektroauto (bzw. dessen Energiespeicher) über ein Ladekabel mit der Ladestation verbunden. Hierzu verfügt die Ladestation über mindestens einen Ladeanschluss insbesondere in Form einer Ladesteckdose Typ 2 nach der Norm IEC 62196-2. Das Ladekabel des Elektroautos weist einen zu dem Ladeanschluss korrespondierenden Anschluss insbesondere in Form eines Ladesteckers Typ 2 nach der Norm IEC 62196-2 auf.

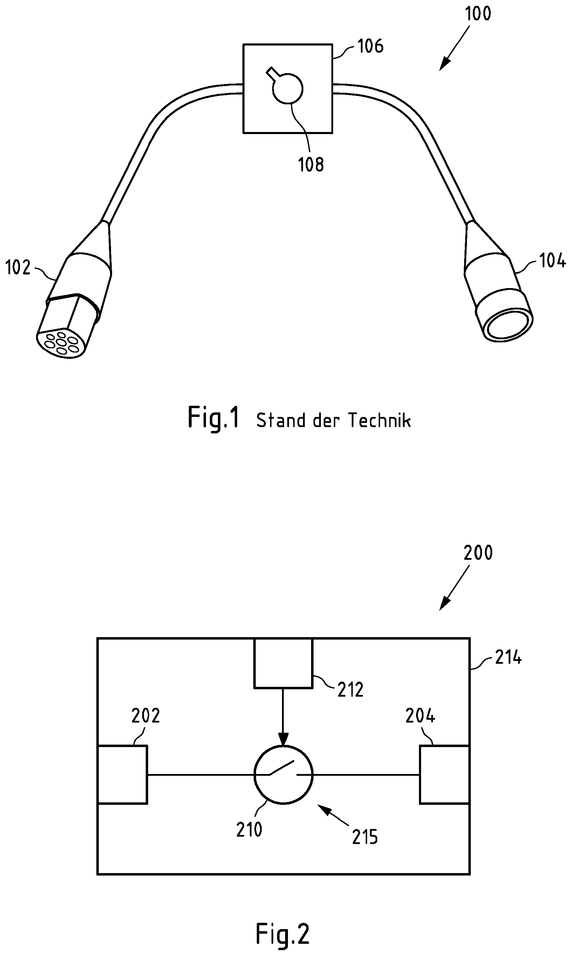

Bestimmte (kleinere) Elektroautos können über einen fest angeschlossenes Ladekabel mit einem Haushaltsstecker verfügen. Um dennoch ein Laden an einer zuvor beschriebenen Ladestation zu ermöglichen, sind aus dem Stand der Technik Ladeadapter bekannt. Figur 1 zeigt einen beispielhaften Ladeadapter 100 gemäß dem Stand der Technik.

Der Ladeadapter 100 verfügt über einen ersten Adapteranschluss 102. Der erste Adapteranschluss 102 ist vorliegend ein Ladestecker Typ 2. Ferner umfasst der Ladeadapter 100 einen zweiten Adapteranschluss 104. Der zweite Adapteranschluss 104 ist vorliegend ein Haushaltsanschluss 104 (z.B. Schukokupplung). Die beiden Adapteranschlüsse 102, 104 sind jeweils über ein elektrisches Kabel mit einem mechanischen Schlüsselschalter 106 verbunden. Über einen mechanischen Schlüssel 108 kann der Schlüsselschalter 106 zwischen zumindest zwei Stellungen geschaltet werden. In einer ersten Stellung kann die elektrische Verbindung zwischen den beiden Adapteranschlüssen 102, 104 unterbrochen sein und in der weiteren Stellung kann die elektrische Verbindung zwischen den beiden Adapteranschlüssen 102, 104 hergestellt sein. Insbesondere ist der Schlüsselschalter 106 in der weiteren Position eingerichtet, den Pilotstromkreis einer Ladestation zu unterbrechen und damit die Steckerverriegelung an der Ladestation aufzuheben.

Nachteilig bei derartigen proprietären Ladeadaptern sind die großen mechanischen Schaltelemente in Form der Schlüsselschalter. Neben der Größe des Ladeadapters ist die Handhabung eines entsprechenden Ladeadapters nicht benutzerfreundlich. Zudem ist die Herstellung eines derartigen Ladeadapters mit hohen Kosten verbunden. Des Weiteren ist bei diesen bekannten Ladeadaptern die Steckverbindung zwischen dem zweiten Adapteranschluss und einem verbundenen Haushaltsanschluss eines angeschlossenen Geräts nicht gegen unbefugte Nutzung, insbesondere eine Trennung der Verbindung und/oder ein Anschluss eines anderen Gerätes, geschützt.

Die Dokumente WO2011/09816A1, US 2016/144728A1, DE10 2011007763A1 zeigen Adapter zum Anpassen von verschiedenen Steckverbindungen auf. Weiter zeigen die Dokumente DE10 2011007763A1 und US6149445A verschiedene Schutzgehäuseformen für Steckverbindungen auf.

Daher liegt der Anmeldung die Aufgabe zugrunde, einen Ladeadapter für eine Ladestation bereitzustellen, der kompakt ist und insbesondere kostengünstig herzustellen sowie benutzerfreundlich bedienbar ist.

Die Aufgabe wird gemäß einem ersten Aspekt der Anmeldung durch einen Ladeadapter für eine Ladestation gemäß Anspruch 1 gelöst. Der Ladeadapter umfasst mindestens einen ersten, zu einem Ladeanschluss der Ladestation korrespondierenden Adapteranschluss. Der Ladeadapter umfasst mindestens einen zweiten, zu einem Haushaltsanschluss korrespondierenden Adapteranschluss. Der Ladeadapter umfasst mindestens eine elektronische Schalteinrichtung. Die elektronische Schalteinrichtung ist zum Ermöglichen eines Stromflusses zwischen dem ersten Adapteranschluss und dem zweiten Adapteranschluss während eines Austauschschritts eingerichtet. Der Ladeadapter umfasst mindestens ein mit der elektronischen Schalteinrichtung gekoppeltes erstes Kommunikationsmodul. Das Kommunikationsmodul ist zum Ansteuern des elektronischen Schalters abhängig von einer empfangbaren Schaltinformation eingerichtet, derart, dass ein Stromfluss ermöglicht wird.

Indem im Gegensatz zum Stand der Technik ein Ladeadapter mit einer elektronischen Schalteinrichtung bereitgestellt wird, die über ein Kommunikationsmodul ansteuerbar ist, kann der Ladeadapter kostengünstiger hergestellt und benutzerfreundlich bedient werden. In einfacher Weise kann die elektronische Schalteinrichtung einen Stromfluss durch den Ladeadapter bewirken. Ein kompakter Ladeadapter wird zur Verfügung gestellt.

Der Ladeadapter ist für eine Ladestation insbesondere in Form einer Elektrofahrzeugladestation eingerichtet. Der Ladeadapter weist mindestens einen ersten Adapteranschluss auf, der zu einem Ladeanschluss der Ladestation korrespondiert. Mit anderen Worten ist der erste Adapteranschluss mit einem Ladeanschluss der Ladestation mechanisch und/oder elektrisch koppelbar. Beispielsweise kann der Adapteranschluss ein Stecker bzw. Steckergesicht sein, der/das mit einen entsprechenden Ladeanschluss der Ladestation gekoppelt werden kann.

Darüber hinaus weist der Ladeadapter mindestens einen zweiten Adapteranschluss auf. Der zweite Adapteranschluss korrespondiert zu einem Haushaltsanschluss. Hierunter ist vorliegend zu verstehen, dass der zweite Adapteranschluss derart eingerichtet ist, dass er mit einem (herkömmlichen) Haushaltsanschluss (beispielsweise in Form eines Steckers) mechanisch und/oder elektrisch koppelbar ist.

Der erste Adapteranschluss ist durch den Ladeadapter mit dem zweiten Adapteranschluss elektrisch verbindbar. Insbesondere kann ein Stromfluss zwischen erstem und zweitem Adapteranschluss ermöglicht werden. Es versteht sich, dass der erste Adapteranschluss sich in seinen mechanischen, strukturellen und elektrischen Eigenschaften von dem zweiten Adapteranschluss unterscheidet. Anmeldungsgemäß ist erkannt worden, dass durch das Vorsehen eines elektronischen Schalters ein Stromfluss durch den Ladeadapter in einfacher Weise ermöglicht, insbesondere freigeschaltet, werden kann.

Hierzu ist die elektronische Schalteinrichtung mit einem ersten Kommunikationsmodul gekoppelt. Erfindungsgemäß wird die elektronische Schalteinrichtung von einem ersten Kommunikationsmodul unmittelbar oder mittels eines Steuermoduls derart angesteuert , dass in einem Austauschschritt Strom durch den Ladeadapter fließen kann. Die elektronische Schalteinrichtung ist vorzugsweise eingerichtet, den Pilotstromkreis der Ladestation derart zu ändern (insbesondere zu unterbrechen), dass die Ladeanschlussverriegelung an der Ladestation aufgehoben wird. Strom kann über den Ladeadapter, insbesondere von der Ladestation an ein über den zweiten Adapteranschluss angeschlossenes elektrisches Gerät, fließen. Hierbei ist unter dem Austauschschritt ein Energieaustauschschritt zu verstehen. Dies meint insbesondere zumindest die Zeitdauer, in der ein elektrischer Strom (bzw. elektrische Leistung) über den Ladeadapter von der Ladestation an ein angeschlossenes elektrisches Gerät (oder in umgekehrter Richtung) übertragen wird.

Das Kommunikationsmodul ist eingerichtet, abhängig von einer empfangbaren Schaltinformation (z.B. Schaltsignal und/oder Schaltdatensatz) die elektronische Schalteinrichtung anzusteuern. Insbesondere können unterschiedliche Schaltinformationen empfangbar sein, um entsprechend unterschiedliche Schaltvorgänge zu bewirken. Beispielsweise kann gemäß einer ersten Schaltinformation die elektronische Schalteinrichtung derart angesteuert werden, dass ein Stromfluss ermöglicht wird. Gemäß mindestens einer weiteren Schaltinformation kann die elektronische Schalteinrichtung derart angesteuert werden, dass ein Stromfluss (wieder) unterbrochen wird.

Die elektronische Schalteinrichtung kann ein Schalter in dem Strompfad für die Netzspannung zwischen erstem und zweitem Adapteranschluss sein oder die elektronischen Schalteinrichtung kann eingerichtet sein - wie oben beschrieben wurde -, über den Pilotstromkreis ein Schaltgerät in der Ladestation (selbst) anzusteuern und damit insbesondere darüber zu entscheiden, ob an der Ladestation und somit auch am Ladeadapter Spannung anliegt oder nicht.

Gemäß der Erfindung des anmeldungsgemäßen Ladeadapters umfasst der Ladeadapter mindestens ein Gehäuse.

Das Gehäuse kann beispielsweise aus einem Kunststoffmaterial gebildet sein.

Erfindungsgemäß ist zumindest die elektronische Schalteinrichtung in dem Gehäuse integriert. Auch das mindestens eine erste Kommunikationsmodul kann zumindest teilweise in dem Gehäuse integriert sein.

Das Gehäuse ist eingerichtet, um zumindest während des Austauschschritts eine Kupplung zwischen dem zweiten Adapteranschluss und einem Haushaltsanschluss zu verriegeln. Unter einer Verriegelung ist vorliegend insbesondere eine mechanische Verriegelung zu verstehen, die eine Entnahme eines eingesetzten Haushaltsanschluss zumindest während des Austauschschritts verhindert. Indem ein Gehäuse zur Verriegelung vorgesehen ist, ist der Ladeadapter vor einer unbefugten Nutzung, insbesondere einer unbefugten Unterbrechung der elektrischen Verbindung zwischen der Ladestation (und über den Ladeadapter) und dem angeschlossene Gerät, geschützt.

Vorzugsweise kann zumindest der zweite Adapteranschluss in dem Gehäuse integriert sein. Das Gehäuse kann über eine verriegelbare Öffnung verfügen, die ein Einsetzen des Haushaltsanschluss in einem geöffneten Zustand erlaubt und eine Entnahme in einem geschlossenen Zustand verhindert. Ein Haushaltsanschluss kann beispielsweise durch die verriegelbare Öffnung des Gehäuses mit dem zweiten Adapteranschluss gekoppelt werden. Dann kann die Öffnung verschlossen und insbesondere verriegelt werden. Es versteht sich, dass eine Kabeldurchführung in dem Gehäuse vorgesehen sein kann, um ein an dem Haushaltsanschluss angeschlagenes Kabel (oder sonstige Leitung) aus dem Gehäuse herauszuführen.

Gemäß der Erfindung weist das Gehäuse eine erste über ein Drehgelenk mit einer weiteren Halbschale verbundene Halbschale auf.

Das Drehgelenk kann insbesondere durch mindestens ein Scharnier gebildet sein. Vorzugsweise kann ein Filmscharnier zwischen den beiden Halbschalen vorgesehen sein. In diesem Fall können die beiden Halbschalen und das Drehgelenk einteilig ausgebildet sein. Es versteht sich, dass andere Drehgelenksarten verwendet werden können.

Die erste Halbschale und die weitere Halbschale sind eingerichtet, zumindest eine Verriegelung der Kupplung zwischen dem zweiten Adapteranschluss und einem Haushaltsanschluss durch Umschließen der Kupplung zwischen dem zweiten Adapteranschluss und einem Haushaltsanschluss in einem geschlossenen Zustand des Gehäuses zu bewirken. Unter einem geschlossenen Zustand des Gehäuses ist insbesondere der Zustand gemeint, wenn die beiden Halbschalen aufeinander geklappt sind. In diesem Zustand umschließt das durch die beiden Halbschalen gebildete Gehäuse den mit dem zweiten Adapteranschluss gekoppelten Haushaltsanschluss zumindest teilweise. In dem geschlossenen Zustand kann der Ladeadapter mittels des ersten Ladeanschlusses insbesondere in einen Ladeanschluss in Form einer Ladesteckdose eingesetzt werden. Beispielsweise nach einer Freigabe des Stromflusses kann eine mechanische Verriegelung erfolgen. Aufgrund dieser mechanischen Kopplung und Verriegelung mit diesem Ladeanschluss wird im eingesetzten Zustand ein unbefugtes Öffnen der Halbschalen verhindert. Zusätzliche Verriegelungselemente sind nicht erforderlich. Es versteht sich jedoch, dass zusätzliche Verriegelungselemente (wie mindestens ein Rastelement) vorgesehen sein können.

Darüber hinaus können gemäß einer weiteren Ausführungsform die erste Halbschale und die weitere Halbschale eingerichtet sein, in einem geöffneten Zustand ein Einführen eines Haushaltsanschlusses zu ermöglichen. Insbesondere kann in einem geöffneten Zustand, also wenn die beiden Halbschalen aufgeklappt sind, ein Haushaltsanschluss mit dem zweiten Adapteranschluss mechanisch und elektrisch gekoppelt werden. Beispielsweise kann ein Haushaltsstecker in eine Adaptersteckdose eingesetzt werden. Indem zwei Halbschalen vorgesehen sind, die in einfacher Weise von einem Nutzer öffnenbar und schließbar sind, wird eine besonders einfache und benutzerfreundliche Bedienung bereitgestellt.

Gemäß einer weiteren Ausführungsform des anmeldungsgemäßen Ladeadapters kann der Ladeadapter mindestens einen dritten Adapteranschluss in Form eines USB (Universal Serial Bus)-Anschlusses umfassen. Der dritte Adapteranschluss ist insbesondere mit dem ersten Adapteranschluss elektrisch verbindbar. Das Ermöglichen eines Stromflusses zwischen dem ersten und dritten Adapteranschluss kann durchgeführt werden, wie es zuvor im Zusammenhang mit der Freigabe des Stromflusses zwischen dem ersten und zweiten Adapteranschluss beschrieben wurde. Indem mindestens ein USB-Anschluss zusätzlich bereitgestellt wird, ist eine einfache Anbindung von elektrischen Geräten (z.B. Mobiltelefonen, Tablets etc.) möglich.

Es versteht sich, dass zwei oder mehr (unterschiedliche) USB-Anschlüsse vorgesehen sein können. Darüber hinaus kann ein Ladeadapter gemäß einer Ausführungsform über zwei oder mehr (unterschiedliche) zweite Adapteranschlüsse für entsprechende (unterschiedliche) Haushaltsanschlüsse verfügen.

Vorzugsweise kann der Ladeadapter mindestens einen wiederaufladbaren Energiespeicher aufweisen. Der wiederaufladbare Energiespeicher, insbesondere ein Akkumulator, kann besonders bevorzugt fest in dem Gehäuse des Ladeadapters integriert werden. Hierdurch kann der wiederaufladbare Energiespeicher durch einen von einer Ladestation bereitgestellten Stromfluss aufgeladen werden. Die gespeicherte Energie kann dann insbesondere nach einer Trennung von der Ladestation von einem anderen elektrischen Gerät zu einem späteren Zeitpunkt und/oder an einem anderen Ort genutzt werden.

Grundsätzlich kann das erste Kommunikationsmodul die mindestens eine zuvor beschriebene Schaltinformation über eine drahtgebundene Verbindung erhalten. Gemäß einer bevorzugten Ausführungsform kann das erste Kommunikationsmodul zum Empfangen der Schaltinformation über einen drahtlosen Kommunikationskanal eingerichtet sein. Ein derartiges Kommunikationsmodul verbessert die Nutzerfreundlichkeit weiter. Beispielsweise kann das erste Kommunikationsmodul die mindestens eine Schaltinformation (beispielsweise eine erste oder eine weitere Schaltinformation) von einem mobilen Endgerät eines Nutzers empfangen. Dies ermöglicht es den Nutzer, den Ladeadapter durch Nutzung seines mobilen Endgeräts in einfacher Weise freizuschalten, um einen Stromfluss zu ermöglichen.

Das erste Kommunikationsmodul kann insbesondere ein Kommunikationsmodul sein ausgewählt aus der Gruppe, umfassend:
- Bluetooth-Modul,
- NFC (Nearfield Communication)-Modul,
- RFID (Radio-Frequency Identification)-Modul,
- GSM (Global System for Mobile Communications)-Modul, und
- WLAN (Wireless Local Area Network)-Modul.

Insbesondere kann mittels eines Bluetooth-Moduls und/oder eines NFC-Moduls eine sichere Kommunikation erreicht werden. Eine zuvor beschriebene Schaltinformation kann beispielsweise von einem mobilen Nutzerendgerät an ein entsprechendes erstes Kommunikationsmodul übertragen werden. Vorzugsweise können zwei oder mehr unterschiedliche erste Kommunikationsmodule in einem Ladeadapter integriert sein, um unterschiedliche Kommunikationskanäle anzubieten.

Besonders bevorzugt kann der erste Adapteranschluss ein Ladestecker Typ 2 nach der Norm IEC 62196-2 (oder Ladesteckdose Typ 2 nach der Norm IEC 62196-2) sein. Alternativ oder vorzugsweise zusätzlich kann der zweite Adapteranschluss eine Schukokupplung oder ein Schukostecker sein. Es versteht sich, dass der zweite Adapteranschluss für andere Länder auch durch einen entsprechend der jeweiligen national geprägten Ausführungen entsprechend den "IEC worldplugs" gebildet sein kann.

Ein weiterer Aspekt der Anmeldung ist ein System, insbesondere ein Ladesystem. Das System umfasst mindestens einen zuvor beschriebenen Ladeadapter. Das System umfasst mindestens ein Endgerät, umfassend mindestens ein weiteres zu dem ersten Kommunikationsmodul korrespondierendes Kommunikationsmodul. Das weitere Kommunikationsmodul ist zum Aussenden einer Schaltinformation eingerichtet.

Das Endgerät ist insbesondere ein mobiles Endgerät und kann beispielsweise eindeutig einem Nutzer zugeordnet sein. Beispielsweise kann das Endgerät ein Mobiltelefon, eine Smartwatch, ein Tablet etc. sein. Das Endgerät umfasst mindestens ein weiteres Kommunikationsmodul, wie ein Bluetooth-Modul, NFC-Modul, RFID-Modul, GSM und/oder WLAN-Modul. Das mindestens eine weitere Kommunikationsmodul ist eingerichtet, eine (zuvor beschriebene) Schaltinformation an das erste Kommunikationsmodul des Ladeadapters zu übertragen, um beispielsweise die Freigabe eines Stromflusses oder die Unterbrechung eines Stromflusses zu bewirken. In nutzerfreundlicher und einfacher Weise kann der anmeldungsgemäße Ladeadapter betrieben werden.

Gemäß einer ersten Ausführungsform des anmeldungsgemäßen Systems kann das System mindestens eine entfernt angeordnete Freigabevorrichtung umfassen. Beispielsweise kann als Freigabevorrichtung ein Backend bzw. mindestens ein Server vorgesehen sein. Die Freigabevorrichtung kann zum Übertragen einer Freigabeinformation an das Endgerät eingerichtet sein. Beispielsweise kann ein drahtloser Kommunikationskanal (Mobilfunkkanal) verwendet werden, um eine Freigabeinformation zu übertragen. Das (mobile) Endgerät kann zum Aussenden einer (zuvor beschriebenen) Schaltinformation eingerichtet sein, derart, dass ein Stromfluss nur bei Erhalt der Freigabeinformation ermöglicht wird.

Indem eine insbesondere zentrale und entfernt angeordnete Freigabevorrichtung vorgesehen ist, kann die Freigabe eines Ladeadapters von dieser Freigabevorrichtung gesteuert werden. Nur wenn die Freigabevorrichtung eine Freigabeinformation an das Endgerät übertragen hat, kann - durch Aussenden einer Schaltinformation - ein Stromfluss durch den Ladeadapter in zuvor beschriebener Weise freigeschaltet werden.

Um das Aussenden einer Freigabeinformation (beispielsweise in Form eines Freigabesignals oder eines Freigabedatensatzes) zu bewirken, kann gemäß einer weiteren Ausführungsform eine Authentifizierungsprüfung vorgesehen sein. Vorzugsweise kann das Endgerät zum Aussenden einer Anfragenachricht für die Freigabe eines (bestimmten) Ladeadapters eingerichtet sein. Beispielsweise kann die Anfragenachricht eine Ladeadapterkennung, die insbesondere eindeutig dem Ladeadapter zugeordnet ist, und/oder eine Nutzerkennung (z.B. Nutzername, IMEI (International Mobile Station Equipment Identity) etc.), die insbesondere eindeutig dem Nutzer zugeordnet ist, übertragen werden. Alternativ oder zusätzlich kann eine Gerätekennung des zu betreibenden (z.B. zu ladenden) Geräts übertragen werden. Basierend auf z.B. gespeicherten Nutzerkonten kann die Freigabevorrichtung die empfangenen Daten einer Anfragenachricht überprüfen. Es versteht sich, dass zusätzlich mindestens ein Code, wie ein Nutzerpasswort etc., abgefragt werden kann. Bei einem positiven Prüfungsergebnis kann als Antwort auf die Anfragenachricht die Freigabeinformation von der Freigabevorrichtung ausgesendet werden. Insbesondere kann die Freigabeinformation nur die Freigabe des bestimmten Ladeadapters ermöglichen. Bei einem negativen Prüfungsergebnis bleibt der Ladeadapter gesperrt.

Ein entsprechendes System, insbesondere ein derartiges Multiuser-System, kann vorzugsweise bei einem E-Bike-Sharing-System oder einem ähnlichen System eingesetzt werden. Beispielsweise könnte auf einem mobilen Endgerät eine entsprechend eingerichtete Anwendung (App) installiert sein. Mit der Anwendung kann der Nutzer, der bei einem Provider registriert ist, eine entsprechende Anfragenachricht aussenden und insbesondere eine Freigabeinformation z.B. in Form eines Codes zum Entriegeln eines bestimmten Ladeadapters empfangen. Dieser Code kann beispielsweise als Schaltinformation an den Ladeadapter in zuvor beschriebener Weise übertragen werden. Das an der Ladestation angeschlossene Gerät kann dann genutzt werden. Bei dem Gerät kann es sich zum Beispiel um E-Bikes, Scooter oder ähnliche elektrische Zweiräder handeln. Mit einem solchen elektronischen Ladeadapter ist somit auch das Management eines E-Bike-Sharing-Systems möglich. Weiterhin kann das System auf Campingplätzen oder in Häfen eingesetzt werden. Wenn entsprechende Einrichtungen über Ladestationen verfügen, kann der anmeldungsgemäße Ladeadapter genutzt werden, um einen Anschluss von Haushaltsanschlüssen zu ermöglichen.

Auch kann gemäß einem Aspekt der Anmeldung bei einem System vorgesehen sein, dass die Freigabevorrichtung direkt (ohne Nutzung eines mobilen Endgeräts) eine Freigabeinformation in Form einer Schaltinformation an den Ladeadapter überträgt. Ein noch weiterer Aspekt der Anmeldung ist eine Anwendung, insbesondere eine Softwareanwendung, die auf einem (mobilen) Endgerät installierbar ist, und Code, ausführbar auf einem Prozessor, umfasst. Die Anwendung ist zum Empfangen einer Freigabeinformation für das Freigeben eines bestimmten (zuvor beschriebenen) Ladeadapters von einer entfernt angeordneten Freigabevorrichtung eingerichtet. Die Anwendung ist eingerichtet, basierend auf der empfangenen Freigabeinformation das Aussenden einer Schaltinformation zu bewirken, derart, dass ein Stromfluss durch den Ladeadapter ermöglicht wird.

Die Merkmale der Ladeadapter, Systeme und Anwendungen sind frei miteinander kombinierbar.

Es gibt nun eine Vielzahl von Möglichkeiten, den anmeldungsgemäßen Ladeadapter, das anmeldungsgemäße System und die anmeldungsgemäße Anwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ladeadapters gemäß dem Stand der Technik,
- Fig. 2: eine schematische Ansicht eines Ausführungsbeispiels eines Ladeadapters gemäß der vorliegenden Anmeldung,
- Fig. 3: eine schematische Ansicht eines weiteren Ausführungsbeispiels eines Ladeadapters gemäß der vorliegenden Anmeldung, und
- Fig. 4: eine schematische Ansicht eines Ausführungsbeispiels eines Systems gemäß der vorliegenden Anmeldung.

In den Figuren werden für gleiche Elemente gleiche Bezugszeichen verwendet.

Die Figur 2 zeigt eine schematische Ansicht eines Ausführungsbeispiels eines Ladeadapters 200 gemäß der vorliegenden Anmeldung. Der Ladeadapter 200 umfasst einen ersten Adapteranschluss 202 und einen zweiten Adapteranschluss 204. Es versteht sich, dass auch zwei oder mehr zweite Adapteranschlüsse vorgesehen sein können.

Der erste Adapteranschluss 202 korrespondiert insbesondere elektrisch und mechanisch zu einem (nicht gezeigten) Ladeanschluss einer Ladestation. Vorzugsweise ist der erste Adapteranschluss 202 ein Ladestecker Typ 2 nach der Norm IEC 62196-2. Der zweite Adapteranschluss 204 korrespondiert insbesondere elektrisch und mechanisch zu einem (nicht gezeigten) Haushaltsanschluss. Der zweite Adapteranschluss 204 kann vorzugsweise eine Schukokupplung bzw. eine Schukosteckdose (oder ein entsprechender anderer Haushaltsanschluss entsprechend den jeweiligen nationalen Gegebenheiten) sein.

Ferner ist zu erkennen, dass der Ladeadapter 200 eine (schematisch dargestellte) elektronische Schalteinrichtung 210 (z.B. ein elektronischer Schalter oder ein Schaltgerät) umfasst. Die elektronische Schalteinrichtung 210 ist eingerichtet, einen Stromfluss zwischen dem ersten Adapteranschluss 202 und dem zweiten Adapteranschluss 204 über eine elektrische Verbindung 215 zu ermöglichen bzw. freizugeben. Die elektronische Schalteinrichtung 210 ist insbesondere eingerichtet, den (nicht gezeigten) Pilotstromkreis der Ladestation derart zu ändern (insbesondere zu unterbrechen), dass die Ladeanschlussverriegelung an der Ladestation aufgehoben wird. Es versteht sich, dass die elektronische Schalteinrichtung 210 zudem eingerichtet sein kann, den Pilotstromkreis der Ladestation derart zu ändern (insbesondere die Unterbrechung aufzuheben), dass die Ladeanschlussverriegelung an der Ladestation hergestellt wird.

Darüber hinaus umfasst der dargestellte Ladeadapter 200 mindestens ein erstes Kommunikationsmodul 212, beispielsweise ein Bluetooth- oder NFC-Modul. Es versteht sich, dass zwei oder mehr erste Kommunikationsmodule vorgesehen sein können. Das erste Kommunikationsmodul 212 ist insbesondere eingerichtet, bei Empfang einer Schaltinformation über einen drahtgebundenen oder bevorzugt drahtlosen Kommunikationskanal die elektronische Schalteinrichtung 210 basierend auf der empfangenen Schaltinformation anzusteuern. Beispielsweise kann das erste Kommunikationsmodul 212 bei Empfang einer ersten Schaltinformation die elektronische Schalteinrichtung 210 derart ansteuern, dass ein Stromfluss zwischen den Adapteranschlüssen 202, 204 ermöglicht oder freigegeben wird. Bei Empfang einer weiteren Schaltinformation, die sich von der ersten Schaltinformation unterscheiden kann, kann das erste Kommunikationsmodul 212 die elektronische Schalteinrichtung 210 derart ansteuern, dass ein Stromfluss zwischen den Adapteranschlüssen 202, 204 unterbrochen wird. Zur Ansteuerung des elektronischen Schalters 210 kann das erste Kommunikationsmodul 212 über ein (nicht gezeigtes) Steuermodul verfügen oder mit einem entsprechenden Steuermodul verbunden sein.

Wie aus der Figur 2 ferner zu erkennen ist, kann der Ladeadapter 200 insbesondere ein Gehäuse 214 aufweisen, in dem zumindest die elektronische Schalteinrichtung 210 integriert sein kann. Vorzugsweise kann auch das erste Kommunikationsmodul 212 vollständig in dem Gehäuse integriert sein. Ein Adapteranschluss 202, 204 kann zumindest teilweise in dem Gehäuse 214 integriert sein.

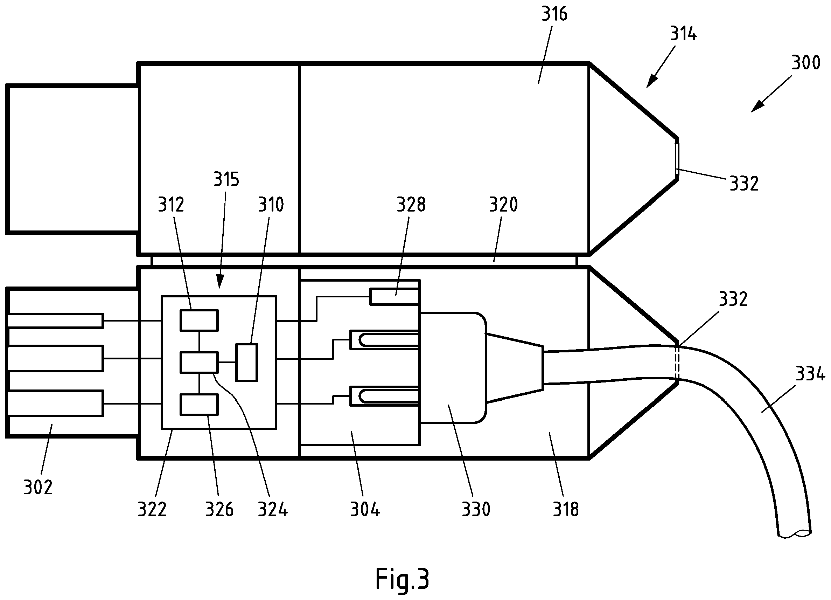

Die Figur 3 zeigt eine schematische Ansicht eines weiteren Ausführungsbeispiels eines Ladeadapters 300 gemäß der vorliegenden Anmeldung. Zur Vermeidung von Wiederholungen werden nachfolgend im Wesentlichen nur die Unterschiede zu dem Ausführungsbeispiel nach Figur 2 beschrieben. Für die anderen Komponenten des Systems 300 wird insbesondere auf die obigen Ausführungen verwiesen.

Der erste Adapteranschluss 302 ist vorliegend mit einer Steuerungsanordnung 322 verbunden. Die Steuerungsanordnung 322 umfasst mindestens ein erstes Kommunikationsmodul 312, eine elektronische Schalteinrichtung 310, ein Steuermodul 324 und mindestens einen wiederaufladbaren elektrischen Speicher 326.

Das Steuermodul 324 kann zum Ansteuern des elektronischen Schalters 310 abhängig von der durch das erste Kommunikationsmodul 312 empfangbaren (ersten oder weiteren) Schaltinformation eingerichtet sein. Darüber hinaus kann das Steuermodul 324 (oder ein anderes, nicht gezeigtes Modul) elektrische Komponenten umfassen, um die elektrischen Parameter (Spannung, Strom etc.) des über den ersten Adapteranschluss 202 empfangenen elektrischen Signals zu ändern. Hierdurch kann das empfangene elektrische Signal in ein Signal transformiert werden, dass über den zweiten Adapteranschluss ausgegeben werden kann und insbesondere die elektrischen Anforderungen des zweiten Adapteranschlusses bzw. des daran angeschlossenen Haushaltsanschluss 330 erfüllt. Entsprechendes gilt für den integrierten elektrischen Speicher 326 und den dritten Adapteranschluss 328.

Wie bereits beschrieben wurde, umfasst der Ladeadapter 300 einen zweiten Adapteranschluss 304, der zu einem Haushaltsanschluss 330, insbesondere einem Schukostecker 330 korrespondiert, und einen dritten Adapteranschluss 328, insbesondere einem USB-Anschluss 328.

Darüber hinaus umfasst der Ladeadapter 300 im vorliegenden, bevorzugten Ausführungsbeispiel ein Gehäuse 314, das aus zwei Halbschalen 316, 318 gebildet ist. Die beiden Halbschalen 316, 318 sind über ein Drehgelenk 320, eingerichtet zum Öffnen und Schließen des Gehäuses 314, miteinander verbunden. Das Drehgelenk 320 ist insbesondere durch mindestens ein Scharnier 320 gebildet. Vorliegend ist ein Filmscharnier 320 zwischen den beiden Halbschalen 316, 318 vorgesehen.

Das Gehäuse 314 kann vorzugsweise aus einem geeigneten Kunststoffmaterial gebildet sein. Vorliegend ist das Gehäuse 314 in einem geöffneten Zustand dargestellt. In diesem Zustand sind die beiden Gehäuseschalen 316, 318 bzw. Gehäusehälften 316, 318 geöffnet, insbesondere aufgeklappt. In dem geöffneten Zustand kann ein Haushaltsstecker 330 mit einem daran angeschlagenen Kabel 334 mit dem zweiten Adapteranschluss 304 gekoppelt werden. Insbesondere kann der Haushaltsstecker von einem Nutzer eingesteckt werden. In entsprechender Weise kann ein USB-Kabel eingesetzt werden.

Durch eine Öffnung 332, insbesondere kann jede Halbschale 316, 318 eine im Wesentlichen halbkreisförmige Öffnung an einem jeweiligen Ende aufweisen, kann das Kabel 334 hinausgeführt werden. Mit anderen Worten kann in dem geschlossenen Zustand des Gehäuses 314 durch die beiden im Wesentlichen halbkreisförmigen Öffnungen eine im Wesentlichen kreisförmige Öffnung gebildet werden, durch die das Kabel 334 aus dem Gehäuse 314 des Ladeadapters 300 nach Außen geführt wird. Es versteht sich, dass zwei oder mehr Öffnungen vorgesehen sein können und/oder eine Öffnung eine andere Form aufweisen kann.

Im geschlossenen Zustand kann der Ladeadapter 300, insbesondere der durch ein Steckergesicht gebildete erste Adapteranschluss 302, mit einem (nicht gezeigten) Ladeanschluss einer Ladestation gekoppelt werden. Insbesondere nach einer Ansteuerung des elektronischen Schalters 310 kann ein Stromfluss zwischen dem ersten und zweiten (oder dritten) Adapteranschluss 302, 304, 328 ermöglicht und eine (herkömmliche) mechanische Verriegelung des ersten Adapteranschlusses 302 mit dem Ladeanschluss bewirkt werden. In diesem Zustand kann eine Entnahme eines Haushaltssteckers 330 und damit eine (ungewollte) Manipulation verhindert werden. Insbesondere ist ein Aufklappen der Halbschalen 316, 318 in diesem Zustand nicht zerstörungsfrei möglich. Ein kompakter und einfach zu bedienender Ladeadapter 300 kann bereitgestellt werden.

Während in dem dargestellten Beispiel der Figur 3 der erste Adapteranschluss 302 und der zweite Adapteranschluss 305 sich in der gleichen Ebene erstrecken, ist gemäß anderen Ausführungsformen auch eine winklige Anordnung zueinander möglich. Zum Beispiel kann ein Abknicken zwischen der Steueranordnung 322 und dem zweiten Adapteranschluss 304 vorgesehen sein.

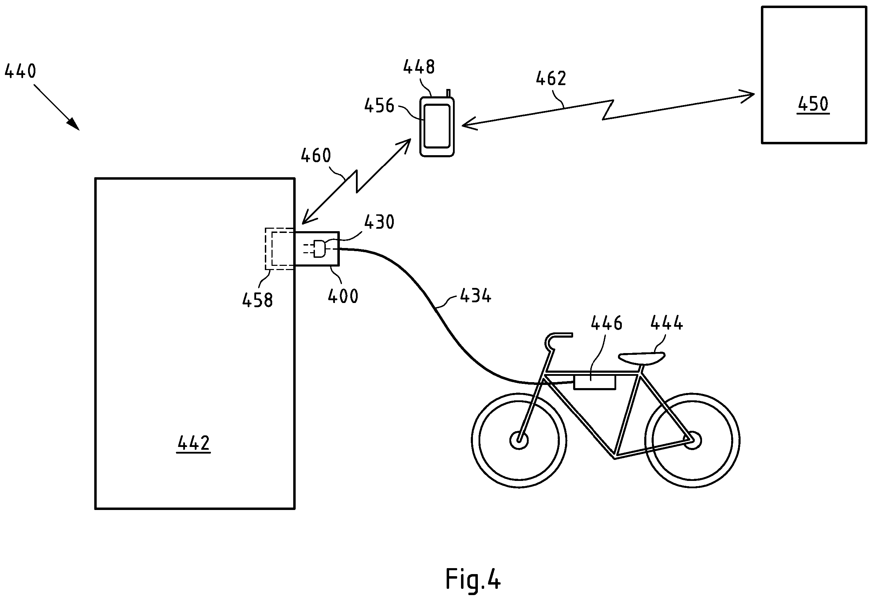

Die Figur 4 zeigt eine schematische Ansicht eines Ausführungsbeispiels eines Systems 440 gemäß der vorliegenden Anmeldung. Das dargestellte System 440 umfasst mindestens einen Ladeadapter 400. Der Ladeadapter 400 ist zu Gunsten einer besseren Übersicht vereinfacht dargestellt. Vorliegend wird davon ausgegangen, dass der Ladeadapter 400 entsprechend dem Ladeadapter 300 nach Figur 3 gebildet sein kann.

Neben dem Ladeadapter 400 ist vorliegend mindestens ein mobiles Endgerät 448, mindestens eine entfernt angeordnete Freigabevorrichtung 450, mindestens eine Ladestation 442 und mindestens ein anzuschließendes (Haushalts-) Gerät 444, vorliegend ein elektrisches Fahrrad 444, auch E-Bike genannt, vorgesehen.

Bei der Ladestation 442 kann es sich um eine herkömmliche Ladestation zur Ladung von (nicht gezeigten) Elektrofahrzeugen, insbesondere Elektroautos handeln. Die Ladestation 442 verfügt über mindestens einen Ladeanschluss 458, der elektrisch und mechanisch mit dem ersten Adapteranschluss des Ladeadapters 400 gekoppelt werden kann.

Um einen wiederaufladbaren Speicher 446 des elektrischen Fahrrads 444 über ein Kabel 434 mit einem zu dem zweiten Adapteranschluss korrespondierenden Haushaltsstecker 430 zu laden, ist eine Ansteuerung des in dem Ladeadapter 400 integrierten elektronischen Schalters erforderlich. Dies kann beispielsweise wie nachfolgend beschrieben durchgeführt werden.

Zunächst kann ein Nutzer mittels seines mobilen Endgeräts 448 (z.B. ein Mobiltelefon) eine Anfragenachricht an eine entfernt angeordnete Freigabevorrichtung 450 für die Freigabe des Ladeadapters 400 aussenden. Hierzu kann auf dem mobilen Endgerät 448 eine entsprechend eingerichtete Anwendung 456 installiert sein. Die Anfragenachricht kann eine Nutzerkennung, eine Adapterkennung und/oder eine Gerätekennung des zu ladenden Geräts 444 bzw. 446 umfassen. Beispielsweise kann die mindestens eine Kennung manuell eingegeben oder durch geeignete Leseeinrichtungen eingelesen werden. Auch kann eine Kennung bereits in dem mobilen Endgerät gespeichert sein. Die Anfragenachricht kann insbesondere über einen drahtlosen Kommunikationskanal 462 (z.B. GSM), der durch ein Fernfeld gebildet werden kann, übertragen werden.

In der Freigabevorrichtung 450 (z.B. ein oder mehrere Server) können die Daten einer Anfragenachricht überprüft und beispielsweise mit gespeicherten Daten abgeglichen werden. Bei einem positiven Prüfungsergebnis kann eine Freigabeinformation von der Freigabevorrichtung 450 an das mobile Endgerät 448, welches zuvor die Anfragenachricht ausgesendet hat, übertragen werden. Bei einem negativen Prüfungsergebnis erfolgt keine Übertragung einer Freigabeinformation.

Bei Empfang einer Freigabeinformation (z.B. in Form eines bestimmten Codes) kann das mobile Endgerät 448, insbesondere die Anwendung 456, basierend auf der Freigabeinformation eine (erste) Schaltinformation generieren. Beispielsweise kann Freigabeinformation und Schaltinformation identisch sein oder die Schaltinformation zumindest einen Teil des Codes der Freigabeinformation umfassen.

Die Schaltinformation kann über einen weiteren drahtlosen Kommunikationskanal 460, der insbesondere durch ein Nahfeld (< 10 m, vorzugsweise < 1 m, besonders bevorzugt < 0,1m) gebildet wird, an ein erstes Kommunikationsmodul des Ladeadapters 400 übertragen werden. Dann kann ein Stromfluss während eines Austauschschritts in zuvor beschriebener Weise freigegeben werden.

Nach Beendigung des Ladevorgangs kann die Anwendung 456 insbesondere das Aussenden einer weiteren Schaltinformation bewirken, um eine Unterbrechung des Stromflusses durch den Ladeadapter 400 und damit ein Ende des Austauschschritts zu bewirken.

## Patentansprüche

1. Ladeadapter (200, 300, 400) für eine Ladestation (442), umfassend:
- mindestens einen ersten, zu einem Ladeanschluss (458) der Ladestation (442) korrespondierenden Adapteranschluss (202, 302),
- mindestens einen zweiten, zu einem Haushaltsanschluss (330, 430) korrespondierenden Adapteranschluss (204, 304),
- der Ladeadapter (200, 300, 400) mindestens ein Gehäuse (214, 314) umfasst,
- der Ladeadapter (200, 300, 400) mindestens eine elektronische Schalteinrichtung (210, 310) umfasst, eingerichtet zum Ermöglichen eines Stromflusses zwischen dem ersten Adapteranschluss (202, 302) und dem zweiten Adapteranschluss (204, 304) während eines Energieaustauschschritts,
- der Ladeadapter (200, 300, 400) mindestens ein mit der elektronischen Schalteinrichtung (210, 310) gekoppeltes erstes Kommunikationsmodul (212, 312) umfasst,
- wobei das erste Kommunikationsmodul (212, 312) zum Ansteuern des elektronischen Schalters (210, 310) abhängig von einer empfangbaren Schaltinformation eingerichtet ist, derart, dass ein Stromfluss ermöglicht wird,
- **gekennzeichnet dadurch, dass**
das Gehäuse (214, 314) zum Verriegeln einer Kupplung zwischen dem zweiten Adapteranschluss (204, 304) und einem Haushaltsanschluss (330, 430) zumindest während des Energieaustauschschritts eingerichtet ist und zumindest die elektronische Schalteinrichtung (210, 310) in dem Gehäuse (214, 314) integriert ist,
- das Gehäuse (214, 314) eine erste über ein Drehgelenk (320) mit einer weiteren Halbschale (318) verbundene Halbschale (316) aufweist, und
- die erste Halbschale (316) und die weitere Halbschale (318) zum Bewirken einer Verriegelung der Kupplung zwischen dem zweiten Adapteranschluss (204, 304) und dem Haushaltsanschluss (330, 430) durch Umschließen der Kupplung zwischen dem zweiten Adapteranschluss (204, 304) und dem Haushaltsanschluss (330, 430) in einem geschlossenen Zustand eingerichtet sind.

2. Ladeadapter (200, 300, 400) nach Anspruch 1, **dadurch gekennzeichnet, dass** die erste Halbschale (316) und die weitere Halbschale (318) zum Ermöglichen eines Einsetzens eines Haushaltsanschlusses (330, 430) in einem geöffneten Zustand eingerichtet sind.

3. Ladeadapter (200, 300, 400) nach einem der vorherigen Ansprüche, **dadurch gekennzeichnet, dass**
- der Ladeadapter (200, 300, 400) mindestens einen dritten Adapteranschluss (328) in Form eines USB-Anschlusses (328) umfasst,
- wobei der dritte Adapteranschluss (328) mit dem ersten Adapteranschluss (202, 302) elektrisch verbindbar ist.

4. Ladeadapter (200, 300, 400) nach einem der vorherigen Ansprüche, **dadurch gekennzeichnet, dass** der Ladeadapter (200, 300, 400) mindestens einen wiederaufladbaren Energiespeicher (326) aufweist.

5. Ladeadapter (200, 300, 400) nach einem der vorherigen Ansprüche, **dadurch gekennzeichnet, dass**
- das erste Kommunikationsmodul (212, 312) zum Empfangen der Schaltinformation über einen drahtlosen Kommunikationskanal (460) eingerichtet ist,
- wobei das erste Kommunikationsmodul (212, 312) insbesondere ein Kommunikationsmodul ist ausgewählt aus der Gruppe, umfassend:
- Bluetooth-Modul,
- NFC-Modul,
- RFID-Modul,
- GSM-Modul, und
- WLAN-Modul.

6. Ladeadapter (200, 300, 400) nach einem der vorherigen Ansprüche, **dadurch gekennzeichnet, dass**
- der erste Adapteranschluss (202, 302) ein Ladestecker Typ 2 oder eine Ladesteckdose Typ 2 ist,
und/oder
- der zweite Adapteranschluss (204, 304) eine Schukokupplung oder ein Schukostecker ist.

7. Ladeadapter (200, 300, 400) nach einem der vorherigen Ansprüche, **dadurch gekennzeichnet, dass**
- das Drehgelenk (320) durch ein Filmscharnier zwischen den beiden Halbschalen gebildet ist.

8. Ladeadapter (200, 300, 400) nach Anspruch 7, **dadurch gekennzeichnet, dass**
- die beiden Halbschalen und das Drehgelenk einteilig ausgebildet sind.

9. Ladeadapter (200, 300, 400) nach einem der vorherigen Ansprüche, **dadurch gekennzeichnet, dass**
- nach einer Freigabe des Stromflusses die mechanische Verriegelung erfolgt.

10. Ladeadapter (200, 300, 400) nach einem der vorherigen Ansprüche, **dadurch gekennzeichnet, dass**
- in dem geschlossenen Zustand der Ladeadapter mit einem Ladeanschluss einer Ladestation koppelbar ist,
- wobei nach einer Ansteuerung des elektronischen Schalters ein Stromfluss zwischen dem ersten und zweiten Adapteranschluss ermöglicht wird und eine mechanische Verriegelung des ersten Adapteranschlusses mit dem Ladeanschluss bewirkt ist, wobei in diesem Zustand eine Entnahme eines Haushaltssteckers 330 und damit eine Manipulation verhindert wird.

11. System (440), umfassend:
- mindestens einen Ladeadapter (200, 300, 400) nach einem der vorherigen Ansprüche, und
- mindestens ein mobiles Endgerät (448), umfassend mindestens ein weiteres zu dem ersten Kommunikationsmodul (212, 312) korrespondierendes Kommunikationsmodul,
- wobei das weitere Kommunikationsmodul zum Aussenden der Schaltinformation eingerichtet ist.

12. System (440) nach Anspruch 11, **dadurch gekennzeichnet, dass**
- das System (440) mindestens eine entfernt angeordnete Freigabevorrichtung (450) umfasst,
- wobei die Freigabevorrichtung (450) zum Übertragen einer Freigabeinformation an das Endgerät (448) eingerichtet ist, und
- das Endgerät (448) zum Aussenden einer Schaltinformation eingerichtet ist, derart, dass ein Stromfluss durch den Ladeadapter nur nach Erhalt der Freigabeinformation ermöglicht wird.

## Claims

1. Charging adapter (200, 300, 400) for a charging station (442), comprising:
- at least one first adapter port (202, 302) corresponding to a charging port (458) of the charging station (442),
- at least one second adapter port (204, 304) corresponding to a household port (330, 430),
- wherein the charging adapter (200, 300, 400) comprises at least one housing (214,314),
- wherein the charging adapter (200, 300, 400) comprises at least one electronic switching device (210, 310) configured to allow a current flow between the first adapter port (202, 302) and the second adapter port (204, 304) during a power exchange step,
- wherein the charging adapter (200, 300, 400) comprises at least one first communication module (212, 312) coupled to the electronic switching device (210,310),
- wherein the first communication module (212, 312) is configured to control the electronic switch (210, 310) depending on a receivable switching information, such that a current flow is enabled,
- **characterized in that**
the housing (214, 314) is configured to lock a coupling between the second adapter port (204, 304) and a household port (330, 430) at least during the power exchange step, and wherein at least the electronic switching device (210, 310) is integrated in the housing (214, 314),
- the housing (214, 314) comprises a first half shell (316) connected to a further half shell (318) via a swivel joint (320), and
- the first half shell (316) and the further half shell (318) are configured to cause a locking of the coupling between the second adapter port (204, 304) and the household port (330, 430) by enclosing the coupling between the second adapter port (204, 304) and the household port (330, 430) in a closed state.

2. Charging adapter (200, 300, 400) according to claim 1, **characterized in that** said first half shell (316) and said further half shell (318) are configured to enable an inserting of a household port (330, 430) in an open state.

3. Charging adapter (200, 300, 400) according to any one of the preceding claims, **characterized in that**
- the charging adapter (200, 300, 400) comprises at least one third adapter port (328) in the form of a USB port (328),
- wherein the third adapter port (328) is electrically connectable to the first adapter port (202, 302).

4. Charging adapter (200, 300, 400) according to any one of the preceding claims, **characterized in that** the charging adapter (200, 300, 400) comprises at least one rechargeable energy storage device (326).

5. Charging adapter (200, 300, 400) according to any one of the preceding claims, **characterized in that**
- the first communication module (212, 312) is configured to receive the switching information via a wireless communication channel (460),
- wherein the first communication module (212, 312) is in particular a communication module selected from the group comprising:
- Bluetooth module,
- NFC module,
- RFID module,
- GSM module, and
- WLAN module.

6. Charging adapter (200, 300, 400) according to any one of the preceding claims, **characterized in that**
- the first adapter port (202, 302) is a charging plug type 2 or a charging socket type 2,
and/or
- the second adapter port (204, 304) is a Schuko coupling or a Schuko plug.

7. Charging adapter (200, 300, 400) according to one of the previous claims, **characterized in that**
- the swivel joint (320) is formed by a film hinge between the two half shells.

8. Charging adapter (200, 300, 400) according to claim 7, **characterized in that**
- the two half shells and the swivel joint are formed in one piece.

9. charging adapter (200, 300, 400) according to one of the previous claims, **characterized in that**
- after a release of the current flow, the mechanical locking takes place.

10. Charging adapter (200, 300, 400) according to one of the previous claims, **characterized in that**
- in the closed state, the charging adapter can be coupled to a charging port of a charging station,
- wherein, after driving the electronic switching device, a current flow is enabled between the first and second adapter ports and a mechanical interlocking of the first adapter port with the charging port is caused, wherein in this state removal of a household plug 330 and thus a tampering is prevented.

11. System (440), comprising:
- at least one charging adapter (200, 300, 400) according to any one of the preceding claims, and
- at least one mobile terminal (448) comprising at least one further communication module corresponding to the first communication module (212, 312),
- wherein the further communication module is configured to transmit the switching information.

12. System (440) according to claim 11, **characterized in that**
- the system (440) comprises at least one remotely located enabling device (450),
- wherein the releasing device (450) is configured to transmit a release information to the terminal (448), and
- the terminal (448) is configured to transmit a switching information such that a current flow through the charging adapter is released only upon receipt of the release information.

## Revendications

1. Adaptateur de charge (200, 300, 400) pour une station de charge (442), comprenant :
- au moins un première connexion d'adaptateur (202, 302) correspondant à une connexion de charge (458) de la station de charge (442),
- au moins une deuxième connexion d'adaptateur (204, 304) correspondant à un port domestique (330, 430),
- l'adaptateur de charge (200, 300, 400) comprend au moins un boîtier (214, 314),
- l'adaptateur de charge (200, 300, 400) comprend au moins un dispositif de commutation électronique (210, 310) configuré pour permettre un flux de courant entre la première connexion d'adaptateur (202, 302) et la deuxième connexion d'adaptateur (204, 304) pendant une étape d'échange d'énergie,
- l'adaptateur de charge (200, 300, 400) comprend au moins un premier module de communication (212, 312) couplé au dispositif de commutation électronique (210, 310),
- où le premier module de communication (212, 312) est configuré pour commander le commutateur électronique (210, 310) dépendant d'une information de commutation recevable, de telle sorte qu'un flux de courant est rendu possible,
- **caractérisé en ce que**
le boîtier (214, 314) est configuré pour verrouiller un couplage entre la deuxième connexion d'adaptateur (204, 304) et une connexion domestique (330, 430) au moins pendant l'étape d'échange d'énergie et au moins le dispositif de commutation électronique (210, 310) est intégré dans le boîtier (214, 314),
- le boîtier (214, 314) a une première demi-coque (316) reliée à une autre demi-coque (318) par l'intermédiaire d'une articulation tournante (320), et
- la première demi-coque (316) et l'autre demi-coque (318) sont configurées pour effectuer un verrouillage de l'accouplement entre la deuxième connexion d'adaptateur (204, 304) et le port domestique (330, 430) en entourant l'accouplement entre la deuxième connexion d'adaptateur (204, 304) et le port domestique (330, 430) dans un état fermé.

2. Adaptateur de charge (200, 300, 400) selon la revendication 1, **caractérisé en ce que** la première demi-coque (316) et l'autre demi-coque (318) sont configurées pour permettre l'insertion d'un port domestique (330, 430) dans un état ouvert.

3. Adaptateur de charge (200, 300, 400) selon l'une des revendications précédentes, **caractérisé en ce que**
- l'adaptateur de charge (200, 300, 400) comprend au moins une troisième connexion d'adaptateur (328) sous la forme d'un port USB (328),
- où la troisième borne d'adaptateur (328) est connectable électriquement à la première connexion d'adaptateur (202, 302).

4. Adaptateur de charge (200, 300, 400) selon l'une des revendications précédentes, **caractérisé en ce que** l'adaptateur de charge (200, 300, 400) a au moins un accumulateur d'énergie rechargeable (326).

5. Adaptateur de charge (200, 300, 400) selon l'une des revendications précédentes, **caractérisé en ce que**
- le premier module de communication (212, 312) est configuré pour recevoir l'information de commutation via un canal de communication sans fil (460),
- où le premier module de communication (212, 312) est en particulier un module de communication choisi du groupe comprenant :
- module Bluetooth,
- module NFC,
- module RFID,
- module GSM, et
- module de réseau local sans fil.

6. Adaptateur de charge (200, 300, 400) selon l'une des revendications précédentes, **caractérisé en ce que**
- la première connexion de l'adaptateur (202, 302) est une prise mâle de charge de type 2 ou une prise femelle de charge de type 2,
et/ou
- la deuxième connexion d'adaptateur (204, 304) est une prise mâle Schuko ou une prise femelle Schuko.

7. Adaptateur de charge (200, 300, 400) selon l'une des revendications précédentes, **caractérisé en ce que**
- l'articulation tournante (320) est formée par une charnière à film entre les deux demi-coques.

8. Adaptateur de charge (200, 300, 400) selon la revendication 7, **caractérisé en ce que**
- les deux demi-coques et l'articulation tournante sont formées d'une seule pièce.

9. Adaptateur de charge (200, 300, 400) selon l'une des revendications précédentes, **caractérisé en ce que**
- le verrouillage mécanique est effectué après un déblocage du flux de courant.

10. Adaptateur de charge (200, 300, 400) selon l'une des revendications précédentes, **caractérisé en ce que**
- l'adaptateur de charge est couplable, dans l'état fermé, à une connexion de charge d'une station de charge,
- où un flux de courant est rendu possible entre la première et la deuxième connexion de l'adaptateur après une commande du commutateur électronique et un verrouillage mécanique de la première connexion de l'adaptateur avec la connexion de charge est effectué, où un retrait d'une port domestique 330 et donc une manipulation est empêché dans cet état.

11. Système (440) comprenant :
- au moins un adaptateur de charge (200, 300, 400) selon l'une des revendications précédentes, et
- au moins un terminal mobile (448), comprenant au moins un autre module de communication correspondant au premier module de communication (212, 312),
- où l'autre module de communication est configuré pour émettre l'information de commutation.

12. Système (440) selon la revendication 11, **caractérisé en ce que**
- le système (440) comprend au moins un dispositif de déblocage (450) positionné à distance,
- où le dispositif de déblocage (450) est configuré pour transmettre une information de déblocage au terminal (448), et
- le terminal (448) est agencé pour émettre une information de commutation, de telle sorte qu'un flux de courant à travers l'adaptateur de charge n'est possible qu'après réception de l'information de déblocage.
